# FASCICULE DE BREVET EUROPEEN

(11) **EP 3 226 396 B1**
(45) Date de publication et mention de la délivrance du brevet: **08.06.2022**
(21) Numéro de dépôt: 17164329.9
(22) Date de dépôt: 31.03.2017
(51) Int. Cl.: H02M 1/38, H02M 7/5387, H02M 1/088, H03K 17/12

(54) **CONVERTISSEUR D'ÉNERGIE ÉLECTRIQUE, CHAÎNE DE TRACTION COMPORTANT UN TEL CONVERTISSEUR ET VÉHICULE ÉLECTRIQUE DE TRANSPORT ASSOCIÉ**
LEISTUNGSWANDLER, ZUGKETTE, DIE EINEN SOLCHEN WANDLER UMFASST, UND ENTSPRECHENDES ELEKTRISCHES TRANSPORTFAHRZEUG
ELECTRIC ENERGY CONVERTER, POWER TRAIN COMPRISING SUCH A CONVERTER AND RELATED ELECTRIC TRANSPORT VEHICLE

(30) Priorité: 01.04.2016 FR 1652868
(43) Date de publication de la demande: 04.10.2017
(73) Titulaire: ALSTOM Transport Technologies, 93400 Saint-Ouen (FR)
(72) Inventeur: LEPAGE, Jean-Pierre, 65460 BOURS (FR)
(74) Mandataire: Lavoix

(56) Documents cités:
- WO-A1-2015/001311
- SOLDATI ALESSANDRO ET AL: "Design of a control unit for advanced gate drivers featuring adaptive dead-time and diagnostics", IECON 2015 - 41ST ANNUAL CONFERENCE OF THE IEEE INDUSTRIAL ELECTRONICS SOCIETY, IEEE, 9 novembre 2015 (2015-11-09), pages 2485-2490, XP032855623, DOI: 10.1109/IECON.2015.7392476

## Description

La présente invention concerne un convertisseur d'énergie électrique configuré pour convertir une première énergie électrique en une deuxième énergie électrique.

L'invention concerne également une chaîne de traction pour un véhicule électrique de transport, la chaîne de traction comprenant un moteur électrique et un tel convertisseur d'énergie électrique, relié au moteur électrique.

L'invention concerne également un véhicule électrique de transport, tel qu'un véhicule ferroviaire, comprenant une telle chaîne de traction, configurée pour provoquer un déplacement du véhicule.

Le convertisseur d'énergie électrique comprend deux premières bornes associées à la première énergie électrique, au moins une deuxième borne associée à la deuxième énergie électrique, et au moins un bras de commutation, chaque bras de commutation comportant deux demi-bras de commutation connectés en série entre les deux premières bornes et reliés entre eux en un point intermédiaire, le point intermédiaire étant relié à une deuxième borne respective. Chaque demi-bras de commutation comporte au moins un interrupteur. Le convertisseur d'énergie électrique comprend deux modules de commande, chaque module de commande étant configuré pour commander le ou les interrupteurs d'un demi-bras de commutation respectif.

L'invention s'applique au domaine du transport, en particulier du transport ferroviaire, notamment aux véhicules de traction électriques, tels que les locomotives et les automotrices.

Le document *"*Design of a Control Unit for Advanced Gate Drivers Featuring Adaptative Dead-Time and Diagnostics" de Soldari et al décrit un convertisseur d'énergie électrique avec un bras de commutation comportant deux demi-bras de commutation connectés en série. Ce document concerne la gestion du temps mort entre deux commutations successives de deux demi-bras de commutation.

Le document WO 2015/001311 A1 décrit un convertisseur d'énergie électrique comprenant trois bras de commutation, chaque bras de commutation comportant deux demi-bras de commutation connectés en série.

On connait du document US 2014/0063883 A1 un convertisseur d'énergie électrique du type précité. Le convertisseur d'énergie électrique est un onduleur apte à convertir une énergie continue en une énergie alternative. Le convertisseur d'énergie électrique comprend deux premières bornes associées à l'énergie continue, une deuxième borne associée à l'énergie alternative, et un bras de commutation comportant deux demi-bras de commutation connectés en série entre les deux premières bornes et reliés entre eux en un point intermédiaire, le point intermédiaire étant relié à la deuxième borne.

Chaque demi-bras de commutation comporte un interrupteur formé d'un transistor, tel qu'un transistor IGBT (de l'anglais *Insulated-Gate Bipolar Transistor*)*,* et d'une diode connectée en antiparallèle du transistor.

Le convertisseur d'énergie électrique comprend en outre une unité de génération de signaux MLI de commande des interrupteurs, et deux modules de filtrage des signaux MLI générés. Chaque module de filtrage est alors configuré pour commander le ou les interrupteurs d'un demi-bras de commutation respectif, notamment en fonction d'un signal reçu de l'autre module de filtrage. L'ensemble des deux modules de filtrage forme un circuit d'optimisation du temps mort entre deux commutations successives des deux demi-bras de commutation.

Chaque module de filtrage comporte une source de courant, un amplificateur opérationnel et une porte logique ET (de l'anglais *logic AND gate*) recevant, d'une part, un signal MLI généré, et d'autre part, un signal d'état de la part de l'autre module de filtrage, la sortie de la porte logique ET étant reliée électriquement à une électrode de commande du transistor du demi-bras de commutation correspondant.

Toutefois, avec un tel convertisseur d'énergie électrique, le temps mort entre deux commutations successives des deux demi-bras de commutation est parfois encore relativement élevé.

La présente invention a donc pour but de proposer un convertisseur d'énergie électrique permettant d'améliorer la commutation au sein de chaque bras de commutation, tout en réduisant le temps mort entre deux commutations successives des deux demi-bras de commutation.

A cet effet, l'invention a pour objet un convertisseur d'énergie électrique selon la revendication 1.

Avec le convertisseur d'énergie électrique selon l'invention, chaque module de commande comporte un composant logique programmable, tel qu'un FPGA (de l'anglais *Field-Programmable Gate Array*)*,* et les modules de commande communiquent entre eux via la liaison de données bidirectionnelle qui les relient.

La gestion du temps mort entre deux commutations successives des deux demi-bras de commutation est alors optimisée par transmission de messages directement entre les modules de commande. Chaque module de commande est en particulier configuré pour interdire une commande de fermeture du ou des interrupteurs qui lui sont associés, tant qu'il n'a pas reçu, depuis l'autre des deux modules de commande et via la liaison de données, un message indiquant une détection d'ouverture du ou des interrupteurs associés à l'autre des deux modules de commande.

Suivant d'autres aspects avantageux de l'invention, le convertisseur d'énergie électrique est selon l'une quelconque des revendications 2 à 11.

L'invention a également pour objet une chaîne de traction selon la revendication 12.

L'invention a également pour objet une véhicule électrique de transport selon la revendication 13.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un véhicule électrique de transport, tel qu'un véhicule ferroviaire, comprenant une chaîne de traction, la chaîne de traction comportant un moteur électrique et un convertisseur d'énergie électrique relié au moteur électrique ;

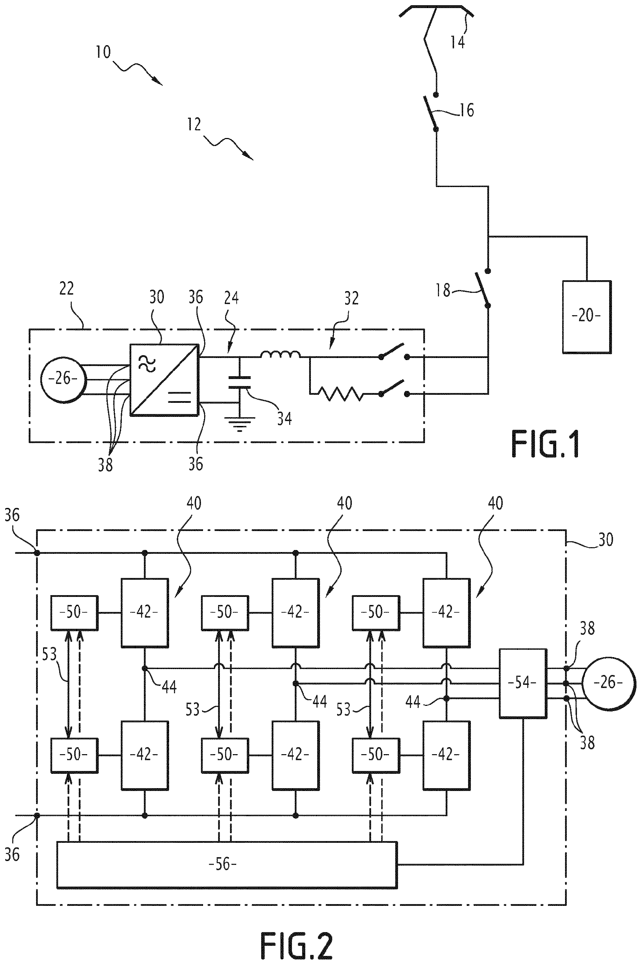

- la figure 2 est une représentation schématique du convertisseur d'énergie électrique de la figure 1, le convertisseur étant configuré pour convertir une première énergie électrique en une deuxième énergie électrique, et comprenant deux premières bornes associées à la première énergie électrique, trois deuxièmes bornes associées à la deuxième énergie électrique, trois bras de commutation connectés en parallèle entre les deux premières bornes, et six modules de commande, chaque bras de commutation comportant deux demi-bras de commutation, chaque module de commande étant configuré pour commander un ou des interrupteurs d'un demi-bras de commutation respectif. ;
- la figure 3 est une représentation schématique de deux modules de commande associés à l'un des bras de commutation de la figure 2, et d'une liaison de données bidirectionnelle reliant les deux modules de commande ;
- la figure 4 est un schéma électrique de l'un des bras de commutation de la figure 2 ; et
- la figure 5 est une représentation schématique de chronogrammes de commutation pour les deux demi-bras de commutation d'un bras de commutation.

Sur la figure 1, un véhicule électrique de transport 10, tel qu'un véhicule ferroviaire, comprend une chaîne de traction 12, la chaîne de traction comportant un pantographe 14 apte à être connecté à une caténaire, non représentée.

La chaîne de traction 12 comprend un commutateur électrique 16 connecté au pantographe 14 et un disjoncteur électrique 18 connecté au commutateur électrique 16. La chaîne de traction 12 comprend, en complément facultatif, un équipement auxiliaire 20 connecté entre le commutateur électrique 16 et le disjoncteur électrique 18, en dérivation par rapport au disjoncteur électrique 18.

Le commutateur électrique 16, le disjoncteur électrique 18 et l'équipement auxiliaire 20 sont connus en soi, et ne sont pas décrits plus en détail. L'équipement auxiliaire 20 est par exemple un convertisseur statique.

L'ensemble de traction 22 est connecté au disjoncteur électrique 18 via un bus continu 24. L'ensemble de traction 22 comporte un moteur électrique 26, un convertisseur d'énergie électrique 30 relié au moteur électrique 26. Dans l'exemple de la figure 1, le convertisseur d'énergie électrique 30 est destiné à délivrer une tension alternative au moteur 26 à partir d'une tension continue issue du bus continu 24.

En complément, l'ensemble de traction 22 comporte un dispositif de filtrage 32, comportant notamment un condensateur de filtrage 34.

En complément facultatif, l'ensemble de traction 22 comporte un appareil de stockage d'énergie électrique, non représenté, l'appareil de stockage d'énergie électrique étant également appelé coffre d'autonomie, et servant, d'une part, de source d'alimentation auxiliaire, et d'autre part, à récupérer de l'énergie électrique lors d'un freinage du véhicule électrique de transport 10. L'appareil de stockage d'énergie électrique est par exemple connecté en dérivation, entre le disjoncteur électrique 18 et le condensateur de filtrage 34.

Le moteur électrique 26 est par exemple un moteur alternatif, tel qu'un moteur triphasé.

Le convertisseur d'énergie électrique 30 est configuré pour convertir une première énergie électrique en une deuxième énergie électrique.

Dans l'exemple de la figure 2, le convertisseur d'énergie électrique 30 est configuré pour convertir une énergie continue associée au bus continu 24 en une énergie alternative, telle qu'une énergie triphasée, associée au moteur électrique 26. La première énergie électrique est alors l'énergie continue, et la deuxième énergie électrique est l'énergie alternative, telle que l'énergie triphasée.

Le convertisseur d'énergie électrique 30 comprend deux premières bornes 36 associées à la première énergie électrique, au moins une deuxième borne 38 associée à la deuxième énergie électrique, et P bras de commutation 40, P étant un nombre entier supérieur ou égal à 1.

Dans l'exemple de la figure 2, le convertisseur d'énergie électrique 30 est un convertisseur d'énergie continue en en énergie alternative triphasée, et comprend alors trois deuxièmes bornes 38 et trois bras de commutation 40, à savoir une deuxième borne 38 et un bras de commutation 40 pour chaque phase de l'énergie triphasée. Autrement dit, le nombre P de bras de commutation 40 est ici égal à 3.

Chaque bras de commutation 40 comporte deux demi-bras de commutation 42 connectés en série entre les deux premières bornes 36 et reliés entre eux en un point intermédiaire 44, le point intermédiaire 44 étant relié à une deuxième borne 38 respective.

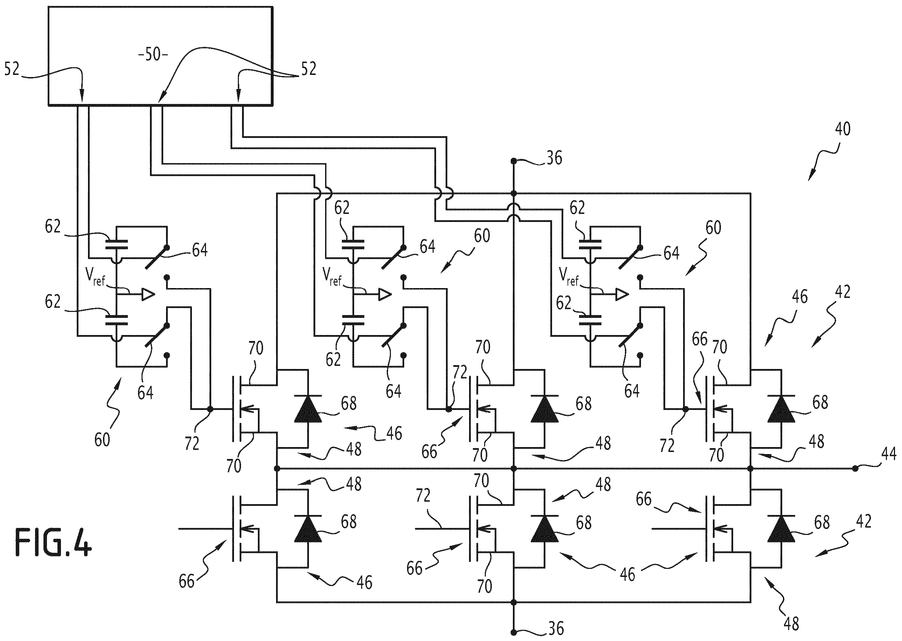

En complément facultatif, chaque demi-bras de commutation 42 comporte N demi-branches de commutation 46 connectées en parallèle, N étant un nombre entier supérieur ou égal à 2, chaque demi-branche de commutation 46 comportant au moins un interrupteur 48, comme représenté sur la figure 4. Chaque demi-bras de commutation 42 comporte alors au moins N interrupteurs 48.

Dans l'exemple de la figure 4, chaque demi-bras de commutation 42 comporte trois demi-branches de commutation 46 en parallèle, et le nombre N est alors égal à 3.

En variante, chaque demi-bras de commutation 42 ne comporte pas de demi-branches de commutation connectées en parallèle, et comporte un ou plusieurs interrupteurs 48, les interrupteurs 48 étant connectés en série le cas échéant.

Le convertisseur d'énergie électrique 30 comprend en outre 2xP modules de commande 50, chaque module de commande 50 étant configuré pour commander les interrupteurs 48 d'un demi-bras de commutation 42 respectif, comme représenté sur la figure 2.

En complément facultatif, chaque module de commande 50 comporte une borne de sortie 52 pour chaque interrupteur 48 respectif, chaque borne de sortie 52 étant configurée pour délivrer un signal de commande pour ledit interrupteur 48 respectif.

Dans l'exemple de la figure 2, le convertisseur d'énergie électrique 30 comprend alors six modules de commande 50, P étant ici égal à 3, avec un module de commande 50 respectif pour chaque demi-bras de commutation 42.

Le convertisseur d'énergie électrique 30 comprend P liaisons de données bidirectionnelle 53, les modules de commande 50 étant reliés entre eux par paire via une liaison de données bidirectionnelle 53 respective. Dans l'exemple de la figure 2, le convertisseur d'énergie électrique 30 comprend alors trois liaisons de données bidirectionnelles 53.

Le convertisseur d'énergie électrique 30 comprend un dispositif de mesure 54, visible sur la figure 2, configuré pour mesurer au moins une grandeur électrique relative à la deuxième énergie électrique, et un dispositif de pilotage 56 configuré pour piloter les différents modules de commande 50, notamment en fonction de la ou des grandeurs mesurées par le dispositif de mesure 54.

Le convertisseur d'énergie électrique 30 comprend une boucle de commande 60 respective pour chaque interrupteur 48, comme représenté sur la figure 4. Chaque boucle de commande 60 est connectée entre une borne de sortie 52 respective et l'interrupteur 48 correspondant, et comporte deux condensateurs 62 et deux organes de commutation 64 pour commuter l'interrupteur 48 correspondant dans un état parmi un état d'ouverture et un état de fermeture.

L'homme du métier notera que sur la figure 4, seuls le module de commande 50 et les boucles de commande 60 associé à l'un des deux demi-bras de commutation 42 du bras de commutation 40 considéré sont représentés par souci de simplification du dessin, le module de commande 50 et les boucles de commande 60 représentés étant ceux associés au demi-bras de commutation 42 supérieur. Le module de commande 50 et les boucles de commande 60 associés au demi-bras de commutation 42 inférieur ne sont donc pas représentés sur la figure 4.

Dans l'exemple de la figure 4, chaque demi-branche de commutation 46 comporte un seul interrupteur 48.

En variante non représentée, chaque demi-branche de commutation 46 comporte plusieurs interrupteurs 48 connectés en série entre la deuxième borne 36 correspondante et le point intermédiaire 44 respectif. Ceci permet alors de convertir une énergie électrique de tension plus élevée.

Au moins un interrupteur 48 est, par exemple, un interrupteur bidirectionnel. Chaque interrupteur 48 est de préférence un interrupteur bidirectionnel.

Lorsque tous les interrupteurs 48 sont bidirectionnels, le convertisseur d'énergie électrique 30 est alors un convertisseur bidirectionnel configuré pour convertir la première énergie électrique en la deuxième énergie électrique si le courant circule depuis des premières bornes 36 vers la ou les deuxièmes bornes 38, et inversement configuré pour convertir la deuxième énergie électrique en la première énergie électrique si le courant circule depuis la ou les deuxièmes bornes 38 vers les premières bornes 36.

Ce fonctionnement du convertisseur d'énergie électrique 30 en inverse pour convertir la deuxième énergie électrique en la première énergie électrique est notamment utile pour récupérer de l'énergie lors d'un freinage du véhicule électrique de transport 10.

Chaque interrupteur bidirectionnel 48 comporte, par exemple, un composant semi-conducteur commandable de commutation 66 et une diode 68 connectée en antiparallèle du composant semi-conducteur commandable de commutation 66. Comme connu en soi, chaque composant semi-conducteur commandable de commutation 66 comporte deux électrodes de conduction 70 et une électrode de commande 72, chaque composant semi-conducteur commandable de commutation 66 étant commandable, via son électrode de commande 72, entre un état parmi un état passant dans lequel le courant circule entre les électrodes de conduction 70, et un état bloqué dans lequel le courant ne circule pas entre les électrodes de conduction 70. La diode 68 est alors connectée entre les électrodes de conduction 70.

Chaque module de commande 50 comporte un composant logique programmable 74, tel qu'un FPGA (de l'anglais *Field-Programmable Gate Array*)*.* Chaque module de commande 50 est, par exemple, réalisé sous forme d'un composant logique programmable 74 respectif. Chaque module de commande 50 est de préférence constitué d'un composant logique programmable 74. Le convertisseur d'énergie électrique 30 comprend, par exemple, 2xP composants logiques programmables 74, chacun formant un module de commande 50 respectif.

Chaque module de commande 50 est alors configuré pour interdire une commande de fermeture du ou des interrupteurs 48 qui lui sont associés, tant qu'il n'a pas reçu, depuis l'autre module de commande 50 correspondant et via la liaison de données 53, un message indiquant une détection d'ouverture du ou des interrupteurs 48 associés à l'autre module de commande 50.

Dans l'exemple de la figure 2, chaque module de commande 50 d'une paire respective est configuré pour interdire une commande de fermeture du ou des interrupteurs 48 qui lui sont associés, tant qu'il n'a pas reçu, depuis l'autre des deux modules de commande 50 de la paire et via la liaison de données 53 correspondante, un message indiquant une détection d'ouverture du ou des interrupteurs 48 associés à l'autre des deux modules de commande 50 de la paire.

Chaque module de commande 50 est configuré pour détecter l'ouverture d'un interrupteur 48 correspondant à partir d'au moins une grandeur choisie parmi le groupe consistant en : une grandeur relative à une tension de l'électrode de commande 72 de l'interrupteur 48 correspondant, une grandeur relative à une tension entre les électrodes de conduction 70 de l'interrupteur 48 correspondant et une tension d'alimentation du module de commande 50.

Plus généralement, chaque module de commande 50 est configuré pour détecter un fonctionnement nominal, c'est à dire un « bon fonctionnement », d'un interrupteur 48 correspondant en fonction d'une grandeur relative à une tension de l'électrode de commande 72 de l'interrupteur 48 correspondant, d'une grandeur relative à une tension entre les électrodes de conduction 70 de l'interrupteur 48 correspondant et de la tension d'alimentation du module de commande 50. Chaque module de commande 50 d'une paire respective est alors configuré pour interdire, pendant une durée prédéterminée, par exemple de l'ordre de la dizaine de microsecondes, une commande de fermeture du ou des interrupteurs 48 qui lui sont associés lorsqu'il reçoit, depuis l'autre des deux modules de commande 50 de la paire et via la liaison de données 53 correspondante, un message indiquant la détection d'un fonctionnement non nominal, également appelé dysfonctionnement, c'est à dire d'un défaut, au niveau de l'interrupteur correspondant.

Plus généralement, chaque module de commande 50 est configuré pour détecter un fonctionnement nominal d'un interrupteur 48 correspondant en fonction d'une évolution dans le temps de la grandeur relative à la tension de l'électrode de commande 72 de l'interrupteur 48 correspondant et/ou de la grandeur relative à la tension entre les électrodes de conduction 70 de l'interrupteur 48 correspondant, en comparant par exemple l'évolution de ladite grandeur avec un chronogramme prédéfini.

Ainsi, si une cause quelconque de panne a été détectée par le module de commande 50 d'une paire, qui a commandé une ouverture du ou des interrupteurs 48 qui lui sont associés, l'autre module de commande 50 de la paire interdit la commande de fermeture du ou des interrupteurs 48 qui lui sont associés.

Chaque module de commande 50 est de préférence configuré pour détecter l'ouverture d'un interrupteur 48 correspondant à partir de chacune des grandeurs parmi le groupe précité.

Lorsqu'une grandeur prise en compte pour cette détection d'ouverture est la tension de l'électrode de commande 72 de l'interrupteur 48 correspondant, c'est-à-dire la tension de grille, le module de commande 50 est configuré pour analyser un niveau et/ou une forme d'onde de la tension de l'électrode de commande 72. Le module de commande 50 est en particulier configuré pour vérifier l'atteinte, par la tension de l'électrode de commande 72, de seuils de tension correspondant à l'ouverture, respectivement à la fermeture, de l'interrupteur 48 correspondant. En variante ou en complément, le module de commande 50 est en particulier configuré pour vérifier qu'un front, tel qu'un front montant ou un front descendant, de la tension de l'électrode de commande 72, correspondant à l'ouverture, respectivement à la fermeture, de l'interrupteur 48 correspondant présente une pente de valeur supérieure à une pente minimale prédéfinie.

Lorsqu'une grandeur prise en compte pour cette détection d'ouverture est la tension entre les électrodes de conduction 70 de l'interrupteur 48 correspondant, le module de commande 50 est configuré pour analyser par exemple une tension rémanente entre les électrodes de conduction 70 après une commande d'ouverture de l'interrupteur 48 correspondant. Le module de commande 50 est en particulier configuré pour vérifier si ladite tension rémanente évolue de manière inattendue, par exemple si successivement elle dépasse puis revient en-dessous d'un seuil prédéfini sur une très courte période, par exemple de l'ordre de la microseconde.

Dans l'exemple où le courant circule dans la diode 68 d'un interrupteur 48, la tension aux bornes du composant semi-conducteur 66 reste inférieure à la tension de saturation après la commande d'ouverture de l'interrupteur 48. Dans ce cas, l'autorisation de commutation est délivrée immédiatement après le passage de la tension de l'électrode de commande 72 sous un seuil prédéterminé. Dans cet exemple, avantageusement, les modules de commande 50 de la paire correspondante sont propres à échanger les valeurs de tension entre les électrodes de conduction 70, et à la réception d'un message indiquant la détection d'un fonctionnement nominal, chaque module de commande 50 de la paire vérifie que l'historique de sa propre tension entre les électrodes de conduction 70 est bien cohérente (c'est-à-dire inverse) avec la tension entre les électrodes de conduction 70 mesurée par l'autre module de commande 50 de la paire.

En complément facultatif, le module de commande 50 est également configuré pour vérifier si une impulsion de commande, reçue de la part du dispositif de pilotage 56, présente une durée supérieure à une valeur minimale prédéfinie.

Avantageusement, suite à l'interdiction d'une commande de fermeture par un module de commande 50, le module de commande 50 correspondant transmet un message correspondant au dispositif de pilotage 56. Le dispositif de pilotage 56 est alors propre à réémettre la commande de fermeture ou à lancer un protocole de diagnostic de l'origine de l'interdiction de fermeture, en fonction de l'ensemble des données dont il dispose, à savoir notamment les différentes mesures de courant et de tension au niveau des interrupteurs 48, le nombre d'interdictions d'une commande de fermeture ayant eu lieu....

Selon un aspect complémentaire facultatif, au moins un module de commande 50 est configuré en outre pour synchroniser les commutations des interrupteurs 48 d'un demi-bras de commutation 42 respectif. Chaque module de commande 50 est de préférence configuré pour synchroniser les commutations des interrupteurs 48 du demi-bras de commutation 42 auquel il est associé.

Chaque module de commande 50 qui est apte à synchroniser les commutations des interrupteurs 48 d'un demi-bras de commutation 42 respectif est configuré pour piloter la délivrance des signaux de commandes desdits interrupteurs 48 en fonction de délais de commutation prédéfinis, un délai de commutation prédéfini étant associé à chacun des interrupteurs 48 dudit demi-bras de commutation 42.

Autrement dit, chaque module de commande 50 est alors propre à délivrer les signaux de commande aux boucles de commande 60, en particulier à leurs organes de commutation 64, ceci de manière décalée d'une boucle de commande 60 à l'autre, en fonction des caractéristiques des interrupteurs 48, en particulier en fonction des délais de commutations prédéfinis qui leur sont associés.

L'homme du métier comprendra alors que chaque module de commande 50 vise, selon cet aspect complémentaire facultatif, à retarder la commutation de l'interrupteur 48 ayant tendance à commuter le plus vite parmi les différents interrupteurs 48 du demi-bras de commutation 42 concerné, et au contraire à commander au plus tôt la commutation de l'interrupteur 48 ayant tendance à commuter le plus lentement parmi lesdits différents interrupteurs 48 de ce demi-bras de commutation 42.

Ces délais de commutation prédéfinis sont par exemple déterminés au cours de tests préliminaires effectués sur les interrupteurs 48, en particulier sur les composants semi-conducteurs commandables de commutation 66. En effet, ces délais ou temps de commutation sont propres à chaque interrupteur 48, et en particulier à chaque composant semi-conducteur commandable de commutation 66, puisqu'ils dépendent de caractéristiques intrinsèques de ces composants, variables d'un composant à l'autre, en particulier d'un composant semi-conducteur commandable de commutation 66 à l'autre, et résultant de la fabrication.

Chaque liaison de données bidirectionnelle 53 est de préférence une liaison isolée, et les deux modules de commande 50 reliés par ladite liaison de données bidirectionnelle 53 sont alors isolés électriquement l'un de l'autre.

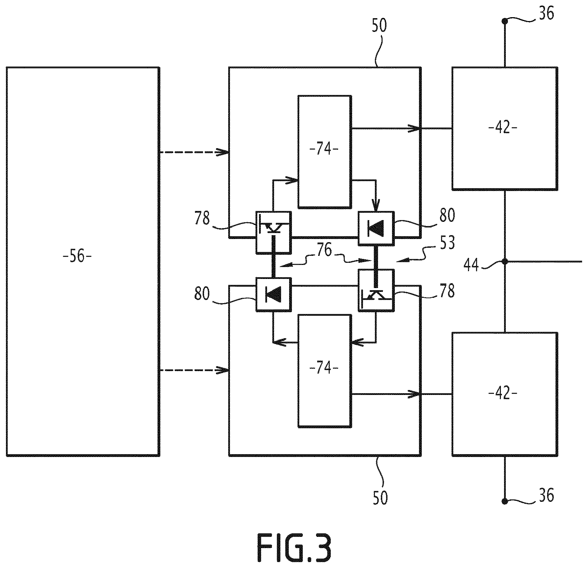

Chaque liaison de données bidirectionnelle 53 comporte, par exemple, deux liens unidirectionnels 76 ayant des sens opposés de transmission de données, comme représenté sur la figure 3.

Le dispositif de mesure 54 est configuré pour mesurer par exemple l'intensité de chaque courant circulant à travers une deuxième borne 38 respective et/ou la tension en cette deuxième borne 38, c'est-à-dire le courant traversant le deuxième point intermédiaire 44 correspondant et/ou la tension en ce deuxième point intermédiaire 44.

Le dispositif de pilotage 56 est configuré pour piloter les différents modules de commande 50, et ainsi pour commander les différents demi-bras de commutation 42 afin d'effectuer la conversion d'énergie. Le pilotage des modules de commande 50 est notamment effectué en fonction de la ou des grandeurs mesurées par le dispositif de mesure 54.

Chaque boucle de commande 60 est de préférence une boucle essentiellement analogique, où les organes de commutation 64 sont par exemple des transistors, tel que des transistors MOS, et les condensateurs 62 servent à fournir la réserve d'énergie pour piloter l'électrode de commande 72 à la tension adéquate pour la commande du composant semi-conducteur commandable de commutation 66 correspondant dans l'état souhaité parmi l'état passant et l'état bloqué.

Chaque boucle de commande 60 présente une très faible longueur, typiquement de l'ordre d'un ou de quelques centimètres.

Chaque boucle de commande 60 a une inductance de très faible valeur, par exemple de l'ordre de quelques dizaines de nH, telle qu'environ 20 nH.

Au moins un composant semi-conducteur commandable de commutation 66 est, par exemple, réalisé en carbure de silicium, également appelé SiC (de l'anglais *Silicon Carbide*)*.* Chaque composant semi-conducteur commandable de commutation 66 est de préférence réalisé en carbure de silicium.

Au moins un composant semi-conducteur commandable de commutation 66 est un transistor, chaque composant semi-conducteur commandable de commutation 66 étant de préférence un transistor.

Au moins un composant semi-conducteur commandable de commutation 66 est par exemple un transistor à effet de champ, également appelé FET (de l'anglais *Field-Effect Transistor*)*,* de préférence un transistor à effet de champ à grille isolée, plus couramment appelé MOSFET ou transistor à effet de champ à structure métal-oxyde-semi-conducteur (de l'anglais *Metal-Oxide Semiconductor Field Effect Transistor*)*.* Chaque composant semi-conducteur commandable de commutation 66 est de préférence un transistor MOSFET. Les électrodes de conduction 70 sont alors des électrodes de drain et de source, et l'électrode de commande 72 est une électrode de grille.

En variante, chaque composant semi-conducteur commandable de commutation 66 est un transistor bipolaire à grille isolée, également appelé IGBT (de l'anglais *Insulated-Gate Bipolar Transistor).* Les électrodes de conduction 70 sont alors des électrodes de collecteur et d'émetteur, et l'électrode de commande 72 est une électrode de grille.

En variante encore, chaque composant semi-conducteur commandable de commutation 66 est un thyristor, par exemple un thyristor à extinction par la gâchette, également appelé thyristor GTO (de l'anglais *Gate Turn-Off Thyristor*)*.*

Chaque lien unidirectionnel 76 comporte un optocoupleur 78 pour isoler l'un par rapport à l'autre les deux modules de commandes 50 qui sont reliés par ce lien.

Chaque lien unidirectionnel 76 a un sens de transmission donné, et comporte une diode 80.

Ainsi, chaque module de commande 50 comporte un composant logique programmable 74 respectif, tel qu'un FPGA, et les modules de commande 50 associés à un même bras de commutation 40 communiquent entre eux via la liaison de données bidirectionnelle 53 qui les relie.

La gestion du temps mort entre deux commutations successives des deux demi-bras de commutation 42 d'un bras de commutation 40 respectif est alors optimisée de par la transmission de messages entre les modules de commande 50 correspondants à un même bras de commutation 40.

Chaque module de commande 50 est en particulier configuré pour interdire une commande de fermeture du ou des interrupteurs 48 qui lui sont associés, tant qu'il n'a pas reçu, depuis l'autre des deux modules de commande 50 et via la liaison de données 53, un message indiquant une détection d'ouverture du ou des interrupteurs 48 associés à l'autre des deux modules de commande 50.

Une telle gestion des temps morts entre commutations successives avec échange de messages entre les composants logiques programmables 74 des modules de commande 50 correspondants à un même bras de commutation 40 est alors plus efficace, et permet d'obtenir un temps mort de valeur plus faible, qu'avec le convertisseur d'énergie électrique de l'état de la technique où la gestion desdits temps morts est effectuée avec des modules de filtrage comportant chacun une source de courant, un amplificateur opérationnel et une porte logique ET.

À titre d'exemple, la valeur du temps mort entre deux commutations successives des deux demi-bras de commutation 42 d'un bras de commutation 40 respectif est compris entre 5 µs et 20 µs, de préférence de l'ordre de 10 µs avec le convertisseur d'énergie électrique 30 selon l'invention.

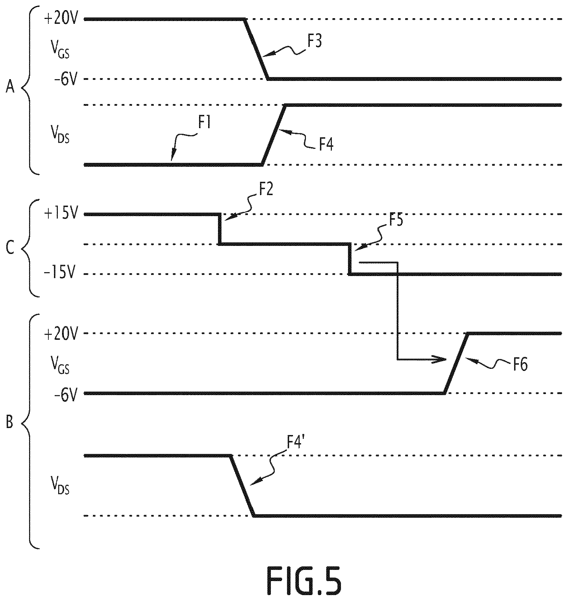

La figure 5 illustre la commutation des deux demi-bras de commutation 42 d'un bras de commutation 40 donné, les courbes de tension V_{GS} et V_{DS} associées à la lettre A correspondant à l'interrupteur 48 d'un premier demi-bras de commutation 42, par exemple le demi-bras de commutation 42 supérieur, c'est-à-dire celui situé en haut sur la figure 3, les courbes de tension V_{GS} et V_{DS} associées à la lettre B correspondant à l'interrupteur 48 du second demi-bras de commutation 42, par exemple le demi-bras de commutation 42 inférieur, situé en bas sur la figure 3, et la courbe associée à la lettre C représentant une tension de commande délivrée par le dispositif de pilotage 56 simultanément aux deux modules de commande 50 de la figure 3.

A titre d'exemple, le niveau +15V de la tension de commande correspond à la fermeture de l'interrupteur 48 du premier demi-bras de commutation 42 (flèche F1), l'interrupteur 48 du deuxième demi-bras de commutation 42 étant alors ouvert. Le niveau 0V correspond à un basculement de commutation entre le premier demi-bras de commutation 42 et le deuxième demi-bras de commutation 42, les interrupteurs des deux demi-bras de commutation 42 étant alors ouverts. Enfin, le niveau -15V de la tension de commande correspond à la fermeture de l'interrupteur 48 du deuxième demi-bras de commutation 42, l'interrupteur 48 du premier demi-bras de commutation 42 étant alors ouvert.

Dans l'exemple de la figure 5, le basculement de commutation s'effectue en commandant l'ouverture de l'interrupteur 48 du premier demi-bras de commutation 42 via un passage de +15V à 0V de la tension de commande (flèche F2) qui engendre un front descendant de la tension V_{GS} (flèche F3), puis un front montant de la tension V_{DS} (flèche F4) pour l'interrupteur 48 du premier demi-bras de commutation 42. La tension V_{DS} de l'interrupteur 48 du deuxième demi-bras de commutation 42 doit être en phase inverse avec la tension V_{DS} de l'interrupteur 48 du premier demi-bras de commutation 42, et la tension V_{DS} de l'interrupteur 48 du deuxième demi-bras de commutation 42 présente alors un front descendant (flèche F4'). La fermeture de l'interrupteur 48 du deuxième demi-bras de commutation 42 est ensuite commandée via un passage de 0V à -15V de la tension de commande (flèche F5) qui engendre un front montant de la tension V_{GS} (flèche F6) pour ledit interrupteur 48 du deuxième demi-bras de commutation 42.

Dans cet exemple de la figure 5, le temps mort entre deux commutations successives des deux demi-bras de commutation 42 du bras de commutation 40 respectif est alors égal à la différence entre les instants temporels correspondant respectivement aux flèches F2 et F5.

Selon l'aspect complémentaire facultatif décrit précédemment, chaque demi-bras de commutation 42 est commandable de manière indépendante d'un demi-bras de commutation à l'autre, avec un module de commande 50 pour chaque demi-bras de commutation 42 qui est configuré pour commander les interrupteurs 48 de ce demi-bras de commutation 42.

En outre, le fait que chaque module de commande 50 comporte une borne de sortie 52 respective pour chaque interrupteur 48 permet de commander chaque interrupteur 48 de manière individuelle, ce qui autorise une prise en compte des spécificités de chaque interrupteur 48, résultant notamment de leur fabrication.

Cela permet alors d'améliorer la commutation au sein de chaque demi-bras de commutation 42, et donc au sein de chaque bras de commutation 40.

La commutation au sein de chaque demi-bras de commutation 42 est encore améliorée lorsque les modules de commande 50 sont configurés en outre pour synchroniser les commutations des interrupteurs 48 de chaque demi-bras de commutation 42. Cela permet de remédier encore mieux aux disparités intrinsèques entre les interrupteurs 48, en particulier entre les composants semi-conducteurs commandables de commutation 66, ces disparités étant inhérentes à la fabrication de ces composants semi-conducteurs commandables de commutation 66 et se traduisant notamment par des délais, ou temps, de commutation variables d'un interrupteur 48 à l'autre, en particulier d'un composant semi-conducteur commandable de commutation 66 à l'autre.

Lorsque les composants semi-conducteurs commandables de commutation 66 sont réalisés en carbure de silicium, leur commutation est bien plus rapide, ce qui permet d'améliorer encore le fonctionnement du convertisseur d'énergie électrique 30 selon l'invention.

À titre d'exemple, la commutation d'un composant semi-conducteur commandable de commutation 66 réalisé en carbure de silicium s'effectue généralement dans un délai compris entre 70 et 100 ns, et est environ 10 fois plus rapide que celle d'un composant semi-conducteur commandable de commutation réalisé en silicium qui s'effectue généralement dans un délai de l'ordre de 1 µs.

On conçoit ainsi que le convertisseur d'énergie électrique 30 selon l'invention permet d'améliorer la commutation au sein de chaque bras de commutation 40, tout en réduisant le temps mort entre deux commutations successives des deux demi-bras de commutation 42.

## Revendications

1. Convertisseur d'énergie électrique (30) configuré pour convertir une première énergie électrique en une deuxième énergie électrique, comprenant :
- deux premières bornes (36) associées à la première énergie électrique ;
- au moins une deuxième borne (38) associée à la deuxième énergie électrique ;
- au moins un bras de commutation (40), chaque bras de commutation (40) comportant deux demi-bras de commutation (42) connectés en série entre les deux premières bornes (36) et reliés entre eux en un point intermédiaire (44), le point intermédiaire (44) étant relié à une deuxième borne (38) respective, chaque demi-bras de commutation (42) comportant au moins un interrupteur (48), et
- deux modules de commande (50), chaque module de commande (50) étant configuré pour commander le ou les interrupteurs (48) d'un demi-bras de commutation (42) respectif,
**caractérisé en ce que** chaque module de commande (50) comporte un composant logique programmable (74),
**en ce que** le convertisseur d'énergie électrique (30) comprend en outre une liaison de données bidirectionnelle (53) reliant les deux modules de commande (50), et
**en ce que** chaque module de commande (50) est configuré pour interdire une commande de fermeture du ou des interrupteurs (48) qui lui sont associés, tant qu'il n'a pas reçu, depuis l'autre des deux modules de commande et via la liaison de données, un message indiquant une détection d'ouverture du ou des interrupteurs (48) associés à l'autre des deux modules de commande (50),
**en ce qu'**au moins un module de commande (50) est configuré en outre pour synchroniser les commutations des interrupteurs (48) d'un demi-bras de commutation (42) respectif,
en ce chaque interrupteur (48) comporte une électrode de commande (72) et deux électrodes de conduction (70), et
**en ce que** chaque module de commande (50) est configuré pour détecter l'ouverture d'un interrupteur (48) correspondant à partir d'au moins une grandeur choisie parmi le groupe consistant en : une grandeur relative à une tension de l'électrode de commande (72) de l'interrupteur (48) correspondant, une grandeur relative à une tension entre les électrodes de conduction (70) de l'interrupteur (48) correspondant et une tension d'alimentation du module de commande (50),
lorsque la grandeur prise en compte pour cette détection d'ouverture est la tension de l'électrode de commande (72) de l'interrupteur (48) correspondant, le module de commande (50) est configuré pour vérifier qu'un front de la tension de l'électrode de commande (72) correspondant à l'ouverture de l'interrupteur (48) présente une pente de valeur supérieure à une pente minimale prédéfinie,
lorsque la grandeur prise en compte pour cette détection d'ouverture est la tension entre les électrodes de conduction (70) de l'interrupteur (48) correspondant, le module de commande (50) est configuré pour vérifier si une tension, rémanente entre les électrodes de conduction (70) après une commande d'ouverture de l'interrupteur (48), dépasse puis revient en-dessous d'un seuil prédéfini sur une période de l'ordre de la microseconde.

2. Convertisseur d'énergie électrique (30) selon la revendication 1, dans lequel le convertisseur d'énergie électrique (30) comprend P bras de commutation (40), 2xP modules de commande (50) et P liaisons de données bidirectionnelle (53), les modules de commande (50) étant reliés entre eux par paire via une liaison de données bidirectionnelle (53) respective et
dans lequel chaque module de commande (50) d'une paire respective est configuré pour interdire une commande de fermeture du ou des interrupteurs (48) qui lui sont associés, tant qu'il n'a pas reçu, depuis l'autre des deux modules de commande (50) de la paire et via la liaison de données correspondante, un message indiquant une détection d'ouverture du ou des interrupteurs (48) associés à l'autre des deux modules de commande (50) de la paire,
P étant un nombre entier supérieur ou égal à 2, de préférence égal à 3.

3. Convertisseur d'énergie électrique (30) selon l'une quelconque des revendications précédentes, dans lequel la liaison de données bidirectionnelle (53) est une liaison isolée, et les deux modules de commande (50) reliés par ladite liaison de données bidirectionnelle (53) sont isolés électriquement l'un de l'autre.

4. Convertisseur d'énergie électrique (30) selon la revendication 3, dans lequel la liaison de données bidirectionnelle (53) comporte deux liens unidirectionnels (76) ayant des sens opposés de transmission de données, chaque lien unidirectionnel (76) comportant un optocoupleur (78).

5. Convertisseur d'énergie électrique (30) selon l'une quelconque des revendications précédentes, dans lequel chaque module de commande (50) est constitué d'un composant logique programmable (74).

6. Convertisseur d'énergie électrique (30) selon l'une quelconque des revendications précédentes, dans lequel chaque demi-bras de commutation (42) comportant N demi-branches de commutation (46) connectées en parallèle, N étant un nombre entier supérieur ou égal à 2, chaque demi-branche de commutation (46) comportant au moins un interrupteur (48),
le nombre N étant de préférence égal à 3.

7. Convertisseur d'énergie électrique (30) selon l'une quelconque des revendications précédentes, dans lequel chaque module de commande (50) comporte une borne de sortie (52) pour chaque interrupteur (48) respectif, chaque borne de sortie (52) étant configurée pour délivrer un signal de commande pour ledit interrupteur (48) respectif.

8. Convertisseur d'énergie électrique (30) selon l'une quelconque des revendications précédentes, dans lequel chaque module de commande (50) qui est apte à synchroniser les commutations des interrupteurs (48) d'un demi-bras de commutation (42) respectif est configuré pour piloter la délivrance des signaux de commandes desdits interrupteurs (48) en fonction de délais de commutation prédéfinis, un délai de commutation prédéfini étant associé à chacun des interrupteurs (48) dudit demi-bras de commutation (42).

9. Convertisseur d'énergie électrique (30) selon l'une quelconque des revendications précédentes, dans lequel le convertisseur d'énergie électrique (30) comprend une boucle de commande (60) respective pour chaque interrupteur (48), chaque boucle de commande (60) étant connectée entre une borne de sortie (52) respective et l'interrupteur (48) correspondant, et comportant deux condensateurs (62) et deux organes de commutation (64) pour commuter l'interrupteur (48) correspondant dans un état parmi un état d'ouverture et un état de fermeture.

10. Convertisseur d'énergie électrique (30) selon l'une quelconque des revendications précédentes, dans lequel au moins un interrupteur (48) est un interrupteur bidirectionnel.

11. Convertisseur d'énergie électrique (30) selon la revendication 10, dans lequel chaque interrupteur (48) bidirectionnel comporte un composant semi-conducteur commandable de commutation (66) et une diode (68) connectée en antiparallèle du composant semi-conducteur commandable de commutation (66),
au moins un composant semi-conducteur commandable de commutation (66) étant de préférence réalisé en carbure de silicium.

12. Chaîne de traction (12) pour un véhicule électrique de transport (10), la chaîne de traction (12) comprenant un moteur électrique (26) et un convertisseur d'énergie électrique (30) relié au moteur électrique (26),
**caractérisé en ce que** le convertisseur d'énergie électrique (30) est selon l'une quelconque des revendications précédentes.

13. Véhicule électrique de transport (10), tel qu'un véhicule ferroviaire, comprenant une chaîne de traction (12) configurée pour provoquer un déplacement du véhicule (10),
**caractérisé en ce que** la chaîne de traction (12) est selon la revendication précédente.

## Patentansprüche

1. Elektrischer Energiewandler (30), der konfiguriert ist, um eine erste elektrische Energie in eine zweite elektrische Energie umzuwandeln, umfassend:
- zwei erste Anschlüsse (36), die mit der ersten elektrischen Energie assoziiert sind;
- mindestens einen zweiten Anschluss (38), der mit der zweiten elektrischen Energie assoziiert ist;
- mindestens einen Schaltarm (40), jeder Schaltarm (40) umfassend zwei Schaltarmhälften (42), die zwischen den beiden ersten Anschlüssen (36) in Reihe verbunden und an einem Zwischenpunkt (44) miteinander verbunden sind, wobei der Zwischenpunkt (44) mit einem jeweiligen zweiten Anschluss (38) verbunden ist, jede Schaltarmhälfte (42) umfassend mindestens einen Schalter (48), und
- zwei Steuermodule (50), wobei jedes Steuermodul (50) konfiguriert ist, um den Schalter oder die Schalter (48) von einer jeweiligen Schaltarmhälfte (42) zu steuern,
**dadurch gekennzeichnet, dass** jedes Steuermodul (50) eine programmierbare Logikkomponente (74) umfasst,
dass der elektrische Energiewandler (30) ferner eine bidirektionale Datenverbindung (53) umfasst, die zwei Steuermodule (50) verbindet, und,
dass jedes Steuermodul (50) konfiguriert ist, um einen Befehl zum Schließen des Schalters oder der Schalter (48), die damit assoziiert sind, verbietet, solange es nicht von dem anderen der zwei Steuermodule und über die Datenverbindung eine Nachricht empfangen hat, die eine Erfassung des Öffnens des Schalters oder der Schalter (48), die mit dem anderen der beiden Steuermodule (50) assoziiert sind, angibt,
dass mindestens ein Steuermodul (50) zusätzlich ferner konfiguriert ist, um die Schaltungen der Schalter (48) einer jeweiligen Schaltarmhälfte (42) zu synchronisieren,
dass jeder Schalter (48) eine Steuerelektrode (72) und zwei Leitungselektroden (70) umfasst, und
dass jedes Steuermodul (50) konfiguriert ist, um das Öffnen eines entsprechenden Schalters (48) anhand mindestens einer Größe zu erfassen, die ausgewählt ist aus der Gruppe, bestehend aus: einer Größe in Bezug auf eine Spannung der Steuerelektrode (72) des entsprechenden Schalters (48), einer Größe in Bezug auf eine Spannung zwischen den Leitungselektroden (70) des entsprechenden Schalters (48), und einer Versorgungsspannung des Steuermoduls (50),
wobei, wenn die für diese Öffnungserfassung berücksichtigte Größe die Spannung der Steuerelektrode (72) des entsprechenden Schalters (48) ist, das Steuermodul (50) konfiguriert ist, um zu überprüfen, ob eine Flanke der Spannung der Steuerelektrode (72), die der Öffnung des Schalters (48) entspricht, eine Steigung mit einem Wert aufweist, der größer ist als eine vordefinierte Mindeststeigung,
wobei, wenn die für diese Öffnungserfassung berücksichtigte Größe die Spannung zwischen den Leitungselektroden (70) des entsprechenden Schalters (48) ist, das Steuermodul (50) konfiguriert ist, um zu überprüfen, ob eine Spannung, die nach einem Befehl zum Öffnen des Schalters (48) zwischen den Leitungselektroden (70) remanent ist, einen vordefinierten Schwellenwert über eine Periode in der Größenordnung von einer Mikrosekunde überschreitet und dann wieder unter diesen Schwellenwert zurückkehrt.

2. Elektrischer Energiewandler (30) nach Anspruch 1, wobei der elektrische Energiewandler (30) P Schaltarme (40), 2xP Steuermodule (50) und P bidirektionale Datenverbindungen (53) umfasst, wobei die Steuermodule (50) paarweise über eine jeweilige bidirektionale Datenverbindung (53) miteinander verbunden sind, und
wobei jedes Steuermodul (50) eines jeweiligen Paars konfiguriert ist, um einen Befehl zum Schließen des Schalters oder der Schalter (48), die damit assoziiert sind, zu verbieten, solange es nicht von dem anderen der zwei Steuermodule (50) des Paars und über die entsprechende Datenverbindung eine Nachricht empfangen hat, die eine Öffnungserfassung des Schalters oder der Schalter (48), die mit dem anderen der zwei Steuermodule (50) des Paars assoziiert sind, angibt,
wobei P eine ganze Zahl größer als oder gleich wie 2, vorzugsweise gleich wie 3, ist.

3. Elektrischer Energiewandler (30) nach einem der vorherigen Ansprüche, wobei die bidirektionale Datenverbindung (53) eine isolierte Verbindung ist und die zwei Steuermodule (50), die durch die bidirektionale Datenverbindung (53) verbunden sind, elektrisch voneinander isoliert sind.

4. Elektrischer Energiewandler (30) nach Anspruch 3, wobei die bidirektionale Datenverbindung (53) zwei unidirektionale Links (76) mit entgegengesetzten Richtungen der Datenübertragung umfasst, jeder unidirektionale Link (76) umfassend einen Optokoppler (78).

5. Elektrischer Energiewandler (30) nach einem der vorherigen Ansprüche, wobei jedes Steuermodul (50) aus einer programmierbaren Logikkomponente (74) besteht.

6. Elektrischer Energiewandler (30) nach einem der vorherigen Ansprüche, jede Schaltarmhälfte (42) umfassend N parallel verbundene Schaltarmhälften (46), wobei N eine ganze Zahl größer als oder gleich wie 2 ist, jede Schaltarmhälfte (46) umfassend mindestens einen Schalter (48),
wobei die Zahl N vorzugsweise gleich wie 3 ist.

7. Elektrischer Energiewandler (30) nach einem der vorherigen Ansprüche, wobei jedes Steuermodul (50) einen Ausgangsanschluss (52) für jeden jeweiligen Schalter (48) umfasst, wobei jeder Ausgangsanschluss (52) konfiguriert ist, um ein Steuersignal für den jeweiligen Schalter (48) auszugeben.

8. Elektrischer Energiewandler (30) nach einem der vorherigen Ansprüche, wobei jedes Steuermodul (50), das geeignet ist, um die Schaltvorgänge der Schalter (48) einer jeweiligen Schaltarmhälfte (42) zu synchronisieren, konfiguriert ist, um die Ausgabe von Steuersignalen der Schalter (48) abhängig von vordefinierten Schaltverzögerungen zu steuern, wobei eine vordefinierte Schaltverzögerung mit jedem der Schalter (48) der Schaltarmhälfte (42) assoziiert ist.

9. Elektrischer Energiewandler (30) nach einem der vorherigen Ansprüche, wobei der elektrische Energiewandler (30) eine jeweilige Steuerschleife (60) für jeden Schalter (48) umfasst, wobei jede Steuerschleife (60) zwischen einem jeweiligen Ausgangsanschluss (52) und dem jeweiligen Schalter (48) verbunden ist und zwei Kondensatoren (62) und zwei Schaltelemente (64) zum Schalten des entsprechenden Schalters (48) in einen von einem offenen Zustand und einem geschlossenen Zustand umfasst.

10. Elektrischer Energiewandler (30) nach einem der vorherigen Ansprüche, wobei mindestens ein Schalter (48) ein bidirektionaler Schalter ist.

11. Elektrischer Energiewandler (30) nach Anspruch 10, wobei jeder bidirektionale Schalter (48) eine steuerbare Halbleiter-Schaltkomponente (66) und eine Diode (68) umfasst, die antiparallel zu der steuerbaren Halbleiter-Schaltkomponente (66) verbunden ist,
wobei mindestens eine steuerbare Halbleiter-Schaltkomponente (66) vorzugsweise aus Siliziumkarbid gefertigt ist.

12. Antriebsstrang (12) für ein elektrisches Transportfahrzeug (10), der Antriebsstrang (12) umfassend einen Elektromotor (26) und einen mit dem Elektromotor (26) verbundenen elektrischen Energiewandler (30),
**dadurch gekennzeichnet, dass** der elektrische Energiewandler (30) gemäß einem der vorherigen Ansprüche ist.

13. Elektrisches Transportfahrzeug (10), wie beispielsweise ein Schienenfahrzeug, umfassend einen Antriebsstrang (12), der konfiguriert ist, um eine Bewegung des Transportfahrzeugs (10) zu bewirken,
**dadurch gekennzeichnet, dass** der Antriebsstrang (12) gemäß dem vorherigen Anspruch ist.

## Claims

1. An electric energy converter (30) configured to convert a first electric energy into a second electric energy, comprising:
- two first terminals (36) associated with the first electric energy;
- at least one second terminal (38) associated with the second electric energy;
- at least one switching arm (40), each switching arm (40) including two switching half-arms (42) connected in series between the two first terminals (36) and connected to one another at a midpoint (44), the midpoint (44) being connected to a respective second terminal (38), each switching half-arm (42) including at least one switch (48), and
- two control modules (50), each control module (50) being configured to control the switch(es) (48) of a respective switching half-arm (42),
**characterized in that** each control module (50) includes a programmable logic component (74),
**in that** the electric energy converter (30) further comprises a two-way data link (53) connecting the two control modules (50), and
**in that** each control module (50) is configured to prohibit a closing command to close the switch(es) (48) associated with it, as long as it has not received, from the other of the two control modules and via the data link, a message indicating a detection of opening of the switch(es) (48) associated with the other of the two control modules (50),
**in that** at least one control module (50) is further configured to synchronize the switching operations of the switches (48) of a respective switching half-arm (42),
**in that** each switch (48) includes a control electrode (72) and two conducting electrodes (70), and
**in that** each control module (50) is configured to detect the opening of a corresponding switch (48) from at least one variable chosen from among the group consisting of: a variable relative to a voltage of the control electrode (72) of the corresponding switch (48), a variable relative to a voltage between the conducting electrodes (70) of the corresponding switch (48), and a supply voltage of the control module (50),
when a variable taken into account for this opening detection is the voltage of the control electrode (72) of the corresponding switch (48), the control module (50) is configured to verify that a pulse edge of the voltage of the control electrode (72) corresponding to the opening of the switch (48) has a slope with a value greater than a predefined minimum slope,
when a variable taken into account for this opening detection is the voltage between the conducting electrodes (70) of the corresponding switch (48), the control module (50) is configured to verify whether a voltage, remaining between the conducting electrodes (70) after a command to open the corresponding switch (48), exceeds, then drops back below a predefined threshold over a period around a microsecond.

2. The electric energy converter (30) according to claim 1, wherein the electric energy converter (30) comprises P switching arms (40), 2xP control modules (50) and P two-way data links (53), the control modules (50) being connected to one another in pairs via a respective two-way data link (53), and
wherein each control module (50) of a respective pair is configured to prohibit a closing command to close the switch(es) (48) associated with it, as long as it has not received, from the other of the two control modules (50) of the pair and via the data link, a message indicating a detection of opening of the switch(es) (48) associated with the other of the two control modules (50) of the pair,
P being an integer greater than or equal to 2, preferably equal to 3.

3. The electric energy converter (30) according to any one of the preceding claims, wherein the two-way data link (53) is an insulated link, and the two control modules (50) connected by said two-way data link (53) are then electrically insulated from one another.

4. The electric energy converter (30) according to claim 3, wherein the two-way data link (53) includes two one-way links (76) having opposite data transmission directions, each one-way link (76) including an optocoupler (78).

5. The electric energy converter (30) according to any one of the preceding claims, wherein each control module (50) consists of a programmable logic component (74).

6. The electric energy converter (30) according to any one of the preceding claims, wherein each switching half-arm (42) includes N switching half-branches (46) connected in parallel, N being an integer greater than or equal to 2, each switching half-branch (46) including a switch (48),
the number N preferably being equal to 3.

7. The electric energy converter (30) according to any one of the preceding claims, wherein each control module (50) includes an output terminal (52) for each respective switch (48), each output terminal (52) being configured to deliver a specific control signal for said respective switch (48).

8. The electric energy converter (30) according to any one of the preceding claims, wherein each control module (50) that is able to synchronize the switching operations of the switches (48) of a respective switching half-arm (42) is configured to control the delivery of the control signals of said switches (48) based on predefined switching delays, a predefined switching delay being associated with each of the switches (48) of said switching half-arm (42).

9. The electric energy converter (30) according to any one of the preceding claims, wherein the electric energy converter (30) comprises a respective control loop (60) for each switch (48), each control loop (60) being connected between a respective output terminal (52) and the corresponding switch (48), and including two capacitors (62) and two switching members (64) to switch the corresponding switch (48) into a state from among an open state and a closed state.

10. The electric energy converter (30) according to any one of the preceding claims, wherein at least one switch (48) is a two-way switch.

11. The electric energy converter (30) according to claim 10, wherein each two-way switch (48) includes a controllable switching semiconductor component (66) and a diode (68) connected in antiparallel with the controllable switching semiconductor component (66),
at least one controllable switching semiconductor component (66) preferably being made from silicon carbide.

12. A traction chain (12) for an electric transport vehicle (10), the traction chain (12) comprising an electric motor (26) and an electric energy converter (30) connected to the electric motor (26),
**characterized in that** the electric energy converter (30) is according to any one of the preceding claims.

13. An electric transport vehicle (10), such as a rail vehicle, comprising such a traction chain (12), configured to cause the vehicle (10) to move,
**characterized in that** the traction chain (12) is according to the preceding claim.
